# EUROPÄISCHE PATENTANMELDUNG

(11) **EP 0 751 693 A2**
(43) Veröffentlichungstag der Anmeldung: **02.01.1997**
(21) Anmeldenummer: 96109894.4
(22) Anmeldetag: 19.06.1996
(51) Int. Cl.: H04Q 11/04

(54) **ATM-Kommunikationsnetz**

(30) Priorität: 30.06.1995 DE 19523986
(71) Anmelder: SIEMENS AKTIENGESELLSCHAFT, 80333 München (DE)
(72) Erfinder: Gradischnig, Klaus, Dipl.-Ing., 82131 Gauting (DE)

(57) **Zusammenfassung**

Das ATM-Kommunikationsnetz (NW) weist eine Mehrzahl von über zumindest ein Übertragungsmedium miteinander verbundene Netzknoten (NK1, NK2, NK3) auf, welche entsprechend einer festgelegten Außerband-Signalisierung jeweils wenigstens einen Signalisierungspunkt darstellen und zwischen benachbarten Signalisierungspunkten jeweils zumindest ein virtueller Kanal auf dem jeweiligen Übertragungsmedium für die Übertragung von nach einem Netzwerkprotokoll festgelegten Signalisierungsinformationen und Netzmanagement-Informationen vorgesehen ist. Dabei ist für die Übertragung der Netzmanagement-Informationen zwischen benachbarten Signalisierungspunkten jeweils zumindest ein weiterer virtueller Kanal auf dem jeweiligen Übertragungsmedium reserviert, der exklusiv den Netzmanagement-Informationen zugeordnet ist.

## Beschreibung

Die Erfindung betrifft ein Kommunikationsnetz gemäß Oberbegriff des Patentanspruches 1.

In einem solchen Kommunikationsnetz kann für die Übertragung von Signalisierungsinformationen im Zuge einer Außerband-Signalisierung und von Netzmanagement-Informationen ein Netzwerkprotokoll vorgesehen sein, wie es beispielsweise durch die ITU-Empfehlungen Q.700, Q.701 und Q.704 vorgeschlagen ist. Durch diese Empfehlungen sind innerhalb eines Kommunikationsnetzes sogenannte Signalisierungspunkte ("signalling points") definiert, die durch die zu diesem Kommunikationsnetz gehörenden Netzknoten repräsentiert sind. Im Zusammenhang mit Schmalband-Kommunikationsnetzen ist dabei durch diese ITU-Empfehlungen vorgeschlagen worden, zwischen benachbarten Signalisierungspunkten bis zu 16 sogenannte "Signalling Links", bei denen es sich entweder um separate physikalische Leitungen oder um Übertragungskanäle auf im Zeitmultiplexbetrieb ausgenutzten Übertragungsleitungen handeln kann, vorzusehen, um einerseits ein redundantes System bei Ausfall einzelner "Links" und andererseits eine höhere Übertragungskapazität bereitzustellen, da die Bandbreite auf den einzelnen "Signalling Links" in Schmalband-Kommunikationssystemen in der Regel auf 64 kbit/s begrenzt ist.

Es ist nun Aufgabe der vorliegenden Erfindung, einen Weg zu zeigen, wie ein Kommunikationsnetz gemäß Oberbegriff des Patentanspruches 1 ausgebildet werden kann, um die Übertragung von Signalisierungsinformationen und Netzmanagement-Informationen optimieren zu können.

Gelöst wird diese Aufgabe durch die im Patentanspruch 1 angegebenen Merkmale. Die Erfindung bringt dabei den Vorteil mit sich, daß durch die getrennte Übertragung der Netzmanagement-Informationen und der übrigen entsprechend dem verwendeten Netzwerkprotokoll vorgesehenen Signalisierungsinformationen die einzelnen Informationen direkt den in Frage kommenden Einrichtungen (Hardware-Plattformen) zugeführt werden kann. Damit wird das interne Transportsystem in den einzelnen Signalisierungspunkten (Netzknoten) entlastet. Bei einer gemeinsamen Übertragung sämtlicher Informationen müßte dagegen ein "Distributor" vorgesehen sein, um die einzelnen Informationen auszuwerten und diese den jeweils zugeordneten Einrichtungen zuzuführen.

Vorteilhafte Ausgestaltungen der vorliegenden Erfindung ergeben sich aus den Unteransprüchen.

Im folgenden wird die vorliegende Erfindung anhand von Zeichnungen beispielsweise näher beschrieben.
- FIG 1: zeigt ein durch miteinander verbundene Signalisierungspunkte schematisch dargestelltes Kommunikationsnetz, bei welchem die Erfindung angewandt ist,
- FIG 2: zeigt ein Ausführungsbeispiel für die Übertragung von Netzmanagement-Informationen im Zuge von Punkt-zu-Punkt-Verbindungen zwischen zwei benachbarten Signalisierungspunkten,
- FIG 3: zeigt ein weiteres Ausführungsbeispiel für die Übertragung von Netzmanagement-Informationen im Zuge von Punkt-zu-Punkt-Verbindungen zwischen zwei benachbarten Signalisierungspunkten und
- FIG 4: zeigt ein Ausführungsbeispiel für die Übertragung von Netzmanagement-Informationen im Zuge von Punkt-zu-Mehrpunkt-Verbindungen zwischen Signalisierungspunkten.

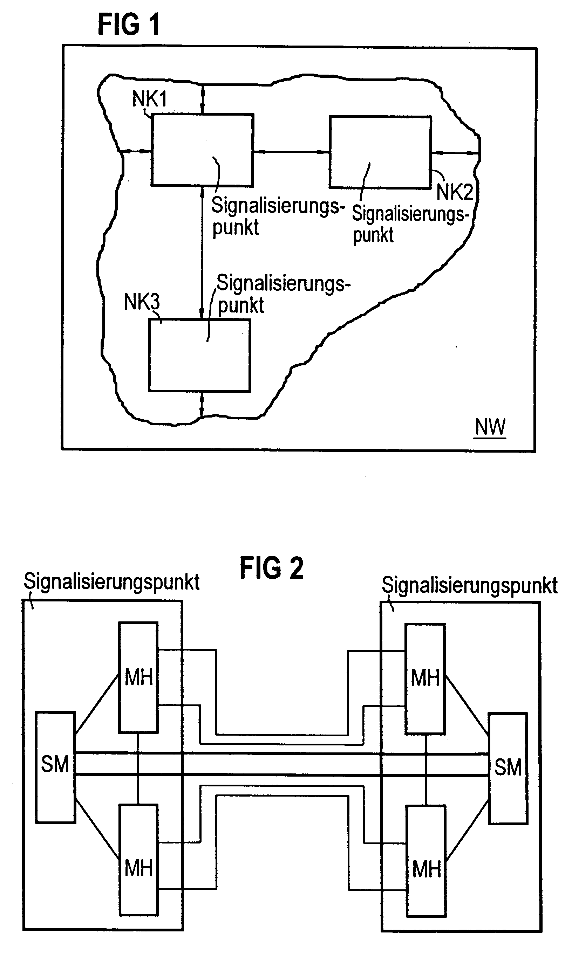

Im folgenden wird von einem Kommunikationsnetz NW ausgegangen, welches nach einem asynchronen Transfermodus ("Asynchronous Transfer Mode", ATM) arbeitet und über eine Mehrzahl von miteinander verbundenen Netzknoten verfügt. Von diesen sind in FIG 1 als Beispiel drei mit NK1, NK2 und NK3 bezeichnete Netzknoten schematisch dargestellt. Dabei seien diese Netzknoten zumindest über ein bidirektional arbeitendes Übertragungsmedium, welches auch als Übertragungsmedium-Paar mit zwei hinsichtlich der Übertragungsrichtung gegenläufig arbeitenden, einander zugeordneten Übertragungsmedien gebildet sein kann, miteinander verbunden. Die Übertragungsmedien können dabei beispielsweise aus elektrischen oder optischen Übertragungsleitungen gebildet sein. Auf dem jeweiligen Übertragungsmedium sind dabei entsprechend dem ATM-Prinzip virtuelle Kanäle vorgesehen, in welchen Nutzinformationen und Signalisierungsinformationen in Form von Zellen übertragen werden. Da die Struktur von Zellen und deren Übertragung in virtuellen Kanälen allgemein bekannt sind, wird hierauf im folgenden nicht näher eingegangen.

In dem Kommunikationsnetz NW sei eine sog. Außerband-Signalisierung vorgesehen, wie sie beispielsweise durch die ITU-T-Empfehlungen Q.700, Q.701 und Q.704 als Signalisierungssystem Nr. 7 vorgeschlagen ist. Bei diesem Signalisierungssystem werden Signalisierungsinformationen und Nutzinformationen getrennt übertragen, gegebenenfalls auch über unterschiedliche Netzknoten innerhalb des Kommnunikationsnetzes. Dabei ist auf den für die Übertragung von Signalisierungsinformationen in Frage kommenden Übertragungsmedien jeweils zumindest ein gesonderter virtueller Kanal für die Übertragung dieser Signalisierungsinformationen reserviert.

Nach den genannten ITU-T-Empfehlungen sind für die Behandlung von Signalisierungsinformationen sog. Signalisierungspunkte ("Signalling Points") definiert, welche durch die in FIG 1 dargestellten Netzknoten repräsentiert sind. Benachbarte Signalisierungspunkte kommunizieren dabei über zumindest einen zuvor genannten gesonderten virtuellen Kanal, der auf dem jeweiligen, in FIG 1 schematisch dargestellten und gegebenenfalls pro Übertragungsrichtung getrennt vorhandenen Übertragungsmedium reserviert ist.

Neben allgemeinen Signalisierungsinformationen, unter welche beispielsweise auch Signalisierungsinformationen für den Aufbau und Abbau von Nutzverbindungen fallen, ist in einem durch die oben genannten ITU-T-Empfehlungen festgelegten Netzwerkprotokoll "Message transfer part", MTP) auch die Übertragung von Netzmanagement-Informationen zwischen benachbarten Signalisierungspunkten vorgesehen. Diese Netzmanagement-Informationen, die in dem MTP Level 3 definiert sind, werden zwischen den einzelnen Signalisierungspunkten übertragen, um bei in dem Kommunikationsnetz NW auftretenden Veränderungen, beispielsweise aufgrund eines Ausfalls von Verbindungswegen bzw. einer Wiederverfügbarkeit von Verbindungswegen, eine entsprechende Aktualisierung der Netzkonfiguration beispielsweise durch Ändern von Routing-Tabellen in den einzelnen Signalisierungspunkten (Netzknoten) vorzunehmen. Als Beispiele für diese Netzmanagement-Informationen seien hier Meldungen über die Nichterreichbarkeit ("transfer prohibited message") bzw. Wiedererreichbarkeit ("transfer allowed message") bestimmter Ziele von dem diese Meldungen abgebenden Signalisierungspunkt aus erwähnt.

Gemäß der vorliegenden Erfindung ist nun vorgesehen, daß für die Übertragung von Netzmanagement-Informationen zwischen benachbarten Signalisierungspunkten gegebenenfalls pro Übertragungsrichtung zumindest ein weiterer gesonderter virtueller Kanal reserviert wird, der exklusiv diesen Netzmanagement-Informationen zugeordnet ist. Damit ist durch die getrennte Übertragung der Netzmanagement-Informationen und der übrigen entsprechend dem verwendeten Netzwerkprotokoll vorgesehenen Signalisierungsinformationen die Möglichkeit gegeben, die einzelnen Informationen direkt den in Frage kommenden Einrichtungen (Hardware-Plattformen) zuzuführen. Auf diese Weise wird das interne Transportsystem in den einzelnen Signalisierungspunkten (Netzknoten) entlastet.

In FIG 2 ist ein Ausführungsbeispiel für die Übertragung von Netzmanagement-Informationen zwischen zwei benachbarten Signalisierungspunkten im Zuge einer Punkt-zu-Punkt-Verbindung dargestellt. Bei diesem Ausführungsbeispiel ist vorgesehen, daß zwischen den beiden Signalisierungspunkten aus Redundanzgründen eine Mehrzahl von Übertragungsmedien vorgesehen ist und zumindest auf einem Teil dieser Übertragungsmedien (als Beispiel sind zwei dargestellt) jeweils zumindest ein virtueller Kanal exklusiv für die Übertragung von Netzmanagement-Informationen reserviert ist. Auch hier und bei den im folgenden noch zu erläuternden Ausführungsbeispielen können dabei die Übertragungsmedien gegebenenfalls auch in der oben angegebenen Weise als Übertragungsmedium-Paar ausgebildet sein.

Darüber hinaus ist in FIG 2, stellvertretend auch für die in den übrigen Figuren angegebenen Ausführungsbeispiele, dargestellt, daß als Ausführungsbeispiel in jedem der Signalisierungspunkte pro Übertragungsmedium eine dezentrale Informations-Behandlungseinrichtung MH ("message handler") sowie eine zentrale Netzmanagement-Einrichtung SM ("signalling network manager") vorgesehen sind. Dabei werden die in dem in Frage kommenden virtuellen Kanal übertragenen Netzmanagement-Informationen direkt der zentralen Netzmanagement-Einrichtung SM zugeführt, durch welche die Netzmanagement-Informationen ausgewertet und daraufhin gegebenenfalls eine oben bereits erwähnte Änderung der Netzkonfiguration (z B. Änderung von Routing-Tabellen in dem eigenen Signalisierungspunkt sowie den benachbarten Signalisierungspunkten) veranlaßt wird. Aufgabe der jeweiligen Informations-Behandlungseinrichtung MH ist es dagegen, die übrigen, oben bereits erwähnten Signalisierungsinformationen zu empfangen und nach Maßgabe von in diesen geführten Adresseninformationen ("point codes") entweder an interne Einrichtungen oder an einen benachbarten Signalisierungspunkt weiterzuleiten. Für letzteres sind in der jeweiligen Informations-Behandlungseinrichtung Routing-Tabellen geführt, die durch die zugehörige zentrale Netzmanagement-Einrichtung auf den aktuellen Stand gehalten werden. Im übrigen sei darauf hingewiesen, daß die gerade genannten Einrichtungen sowohl hardwaremäßig als auch softwaremäßig realisiert sein können.

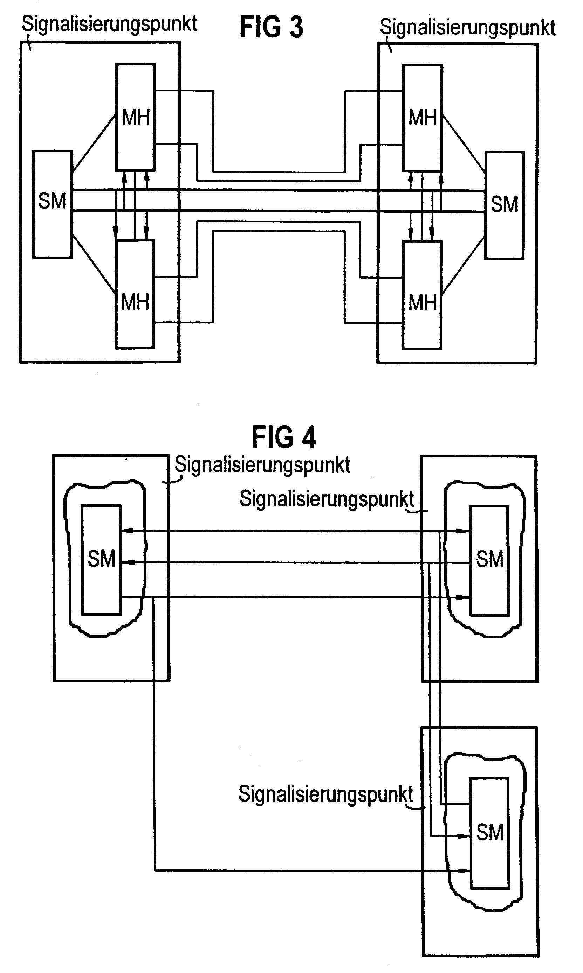

In FIG 3 ist ein weiteres Ausführungsbeispiel für die Übertragung von Netzmanagement-Informationen zwischen zwei benachbarten Signalisierungspunkten im Zuge einer Punkt-zu-Punkt-Verbindung schematisch dargestellt. Dieses Ausführungsbeispiel unterscheidet sich von dem in FIG 2 dargestellten lediglich darin, daß hier durch die jeweilige empfangsseitige dezentrale Informations-Behandlungseinrichtung MH die dem zugehörigen Signalisierungspunkt zugeführten Netzmanagement-Informationen mitgelesen werden, ohne jedoch selbst entsprechend dem Netzwerkprotokoll zu agieren. Jedoch kann die jeweilige Informations-Behandlungseinrichtung auf das Erkennen wichtiger Netzmanagement-Informationen, durch welche beispielsweise eine Nichterreichbarkeit bestimmter Ziele angezeigt wird, direkt reagieren, indem beispielsweise Signalisierungsinformationen, die an momentan nichterreichbare Ziele (Signalisierungspunkte) weiterzuleiten sind, zurückgehalten werden, bis diese Ziele von der zugehörigen Netzmanagement-Einrichtung SM her durch eine oben erwähnte Aktualisierung der Routing-Tabellen wieder freigegeben sind. Damit wird ein Fehlleiten von Signalisierungsinformationen und damit deren Verlust vermieden.

Schließlich ist in FIG 4 ein Ausführungsbeispiel für die Übertragung von Netzmanagement-Informationen zwischen den Signalisierungspunkten des Kommunikationsnetz NW im Zuge einer Punkt-zu-Mehrpunkt-Verbindung schematisch dargestellt. Derartige Verbindungen werden benutzt, um bestimmte Netzmanagement-Informationen, welche Auswirkungen auf die gesamte Netzkonfiguration haben, mit Hilfe eines Rundsendens ("broadcasting") an alle benachbarten Signalisierungspunkte bzw. an eine Gruppe dieser Signalisierungspunkte zu übertragen. Durch eine solche Gruppe kann beispielsweise lediglich einer der Signalisierungspunkte ausgeschlossen sein. Für ein solches Rundsenden ist zusätzlich zu dem oben genannten zumindest einen virtuellen Kanal für die Übertragung von Netzmanagement-Informationen auf dem jeweiligen Übertragungsmedium zumindest ein weiterer virtueller Kanal reserviert, der exklusiv rundzusendenden Netzmanagement-Informationen zugeordnet ist. Dabei ist es für eine effektive Abwicklung eines Rundsendens zweckmäßig, ein ungesichertes Überttragungsverfahren zu benutzen, während ein gesichertes Übertragungsverfahren für Punkt-zu-Punkt-Verbindungen zweckmäßig ist.

Auch bei dem Ausführungsbeispiel gemäß FIG 4 können, wie anhand der FIG 1 bis 3 erläutert wurde, ein oder mehrere Übertragungsmedien zwischen zwei benachbarten Signalisierungspunkten vorgesehen sein.

Von der zentralen Netzmanagement-Einrichtung SM eines Signalisierungspunktes abgegebene Netzmanagement-Informationen werden mit Hilfe des diesem Signalisierungspunkt zugehörigen Koppelnetzwerk sowie möglicherweise der Koppelnetzwerke anderer Signalisierungspunkte oder Crossconnects unter Benutzung des jeweiligen reservierten virtuellen Kanals an die in Frage kommenden zentralen Netzmanagement-Einrichtungen SM der übrigen Signalisierungspunkte weitergeleitet. Eine entsprechende Steuerung der Koppelnetzwerke ist bereits bekannt, so daß darauf nicht näher eingegangen wird.

Die zuvor erwähnte Weiterleitung von Netzmanagement-Informationen an sämtliche benachbarten Signalisierungspunkte mit Ausnahme zumindest eines Signalisierungspunktes kann im übrigen derart realisiert werden, daß hierfür entweder gesonderte virtuelle Kanäle, die den oder die jeweiligen Signalisierungspunkte ausschließen, reserviert werden, die Einstellung der Koppelnetzwerke entsprechend dynamisch geändert wird oder in den Netzmanagement-Informationen eine Adresse ("point code") geführt ist, durch welche derjenige Signalisierungspunkt bezeichnet ist, welcher diese Netzmanagement-Information zu ignorieren hat.

Auch bei dem Ausführungsbeispiel gemäß FIG 4 ist es zweckmäßig, daß durch die in den Signalisierungspunkten gegebenenfalls mehrfach vorhandenen Informations-Behandlungseinrichtungen MH empfangene Netzmanagement-Informationen mitgelesen werden, um in der zuvor angegeben Weise direkt auf bestimmte Netzmanagement-Informationen zu reagieren.

Abschließend sei noch darauf hingewiesen, daß bei den zuvor erläuterten Ausführungsbeispielen bei der Übertragung von Netzmanagement-Informationen eine Flußsteuerung durchgeführt wird, um bei einem burstartigen Auftreten von Netzmanagement-Informationen aus unterschiedliche Richtungen die zentralen Netzmanagement-Einrichtungen der einzelnen Signalisierungspunkte nicht zu überlasten. Diese Flußsteuerung wird dabei direkt durch die Netzmanagement-Informationen empfangenden Netzmanagement-Einrichtungen durchgeführt. Die Flußsteuerung wirkt sich jedoch nicht auf die übrigen Signalisierungsinformationen aus, die über andere virtuelle Kanäle übertragen werden.

## Patentansprüche

1. Nach einem asynchronen Transfermodus arbeitendes Kommunikationsnetz (NW) mit einer Mehrzahl von über zumindest ein Übertragungsmedium miteinander verbundenen Netzknoten (NK1, NK2, NK3), welche entsprechend einer festgelegten Außerband-Signalisierung jeweils wenigstens einen Signalisierungspunkt darstellen und zwischen benachbarten Signalisierungspunkten jeweils zumindest ein virtueller Kanal auf dem jeweiligen Übertragungsmedium für die Übertragung von nach einem Netzwerkprotokoll festgelegten Signalisierungsinformationen und Netzmanagement-Informationen vorgesehen ist,
**dadurch gekennzeichnet,**
daß für die Übertragung der Netzmanagement-Informationen zwischen benachbarten Signalisierungspunkten (z.B. NK1, NK2) jeweils zumindest ein weiterer virtueller Kanal auf dem jeweiligen Übertragungsmedium reserviert wird, der exklusiv den Netzmanagement-Informationen zugeordnet ist.

2. Kommunikationsnetz nach Anspruch 1,
**dadurch gekennzeichnet,**
daß zwischen benachbarten Signalisierungspunkten (z.B. NK1,K2) jeweils eine Mehrzahl von Übertragungsmedien vorgesehen ist und zumindest auf einem Teil dieser Übertragungsmedien jeweils zumindest ein virtueller Kanal exklusiv für die Übertragung von Netzmanagement-Informationen reserviert ist.

3. Kommunikationsnetz nach Anspruch 1 oder 2,
**dadurch gekennzeichnet,**
daß für den Fall, daß in dem jeweiligen Signalisierungspunkt zumindest eine dezentrale Informations-Behandlungseinrichtung (MH) sowie eine zentrale Netzmanagement-Einrichtung (SM) vorgesehen sind, in dem jeweiligen virtuellen Kanal übertragene Netzmanagement-Informationen direkt der zentralen Netzmanagement-Einrichtung (SM) zugeführt sind.

4. Kommunikationsnetz nach Anspruch 3,
**dadurch gekennzeichnet,**
daß durch die jeweilige Informations-Behandlungseinrichtung (MH) die der zugehörigen Netzmanagement-Einrichtung (SM) zugeführten Netzmanagement-Informationen mitgelesen werden, um darauf direkt reagieren zu können.

5. Kommunikationsnetz nach einem der Ansprüche 1 bis 4,
**dadurch gekennzeichnet,**
daß für ein Rundsenden von Netzmanagement-Informationen von einem Signalisierungspunkt zu benachbarten Signalisierungspunkten auf den dafür in Frage kommenden Übertragungsmedien zusätzlich jeweils zumindest ein weiterer virtueller Kanal reserviert und die Verteilung der Netzmanagement-Informationen auf die einzelnen Übertragungsmedien durch eine entsprechende Einstellung eines dem betreffenden Signalisierungspunkt zugehörigen Koppelnetzwerkes vorgenommen wird.

6. Kommunikationsnetz nach Anspruch 5,
**dadurch gekennzeichnet,**
daß für ein Rundsenden von Netzmanagement-Informationen von einem Signalisierungspunkt aus an sämtliche benachbarten Signalisierungspunkte einerseits und an eine Gruppe benachbarter Signalisierungspunkte unter Ausschluß zumindest einer der benachbarten Signalisierungspunkte andererseits unterschiedliche virtuelle Kanäle auf dem jeweiligen Übertragungsmedium reserviert werden.

7. Kommunikationsnetz nach Anspruch 5,
**dadurch gekennzeichnet,**
daß für den Fall, daß für ein Rundsenden von Netz-Management-Informationen von einem sendenden Signalisierungspunkt aus eine der benachbarten Signalisierungspunkte auszuschließen ist, der Auschluß dieses Signalisierungspunktes durch eine entsprechende Einstellung des dem sendenden Signalisierungspunktes zugehörigen Koppelnetzwerkes bewirkt wird.

8. Kommunikationsnetz nach Anspruch 5,
**dadurch gekennzeichnet,**
daß für den Fall, daß für ein Rundsenden von Netz-Management-Informationen von einem sendenden Signalisierungspunkt aus eine der benachbarten Signalisierungspunkte auszuschließen ist, in das Rundsenden sämtliche benachbarten Signalisierungspunkte einbezogen werden, jedoch in den Netzmanagement-Informationen eine Adresseninformation enthalten ist, durch welche derjenige Signalisierungspunkt bezeichnet ist, durch den die Netzmanagement-Informationen zu ignorieren sind.

9. Kommunikationsnetz nach einem der Ansprüche 1 bis 8,
**dadurch gekennzeichnet,**
daß bei der Übertragung von Netzmanagement-Informationen über den jeweiligen virtuellen Kanal eine Flußsteuerung durchgeführt wird.
